# EUROPÄISCHE PATENTANMELDUNG

(11) **EP 1 209 753 A1**
(43) Veröffentlichungstag der Anmeldung: **29.05.2002**
(21) Anmeldenummer: 01811038.7
(22) Anmeldetag: 24.10.2001
(51) Int. Cl.: H01M 8/12, H01M 8/24, H01M 8/02

(54) **Brennstoffzelle mit einer Festelelektrolytschicht**

(30) Priorität: 23.11.2000 EP 00811115
(71) Anmelder: Sulzer Hexis AG, 8400 Winterthur (CH)
(72) Erfinder: Batawi, Emad, Dr., 8400 Winterthur (CH); Honegger, Kaspar, Dr., 8360 Wallenwil (CH)
(74) Vertreter: Sulzer Management AG

(57) **Zusammenfassung**

Die Brennstoffzelle mit einer Festelektrolytschicht (12) bildet zusammen mit zwei Elektrodenschichten (11, 13) ein plattenförmiges Mehrschichtensystem (1). Die Schichten sind mittels Beschichtungsverfahren in der Reihenfolge Anode (11), Elektrolyt (12) und Kathode (13) auf einer offenporigen, elektrisch leitenden Trägerstruktur (10) aufgebracht. Diese Mehrschichtenplatte (1) hat einen äusseren Rand, der während eines stromerzeugenden Betriebs der Brennstoffzelle einem äusseren Milieu (60) ausgesetzt ist, das molekularen Sauerstoff enthält. Das Material der Trägerstruktur nimmt im thermodynamischen Gleichgewicht bei der Betriebstemperatur der Brennstoffzelle je nach Milieu einen oxidierten oder einen reduzierten Zustand an. Der äussere Rand (16) der Mehrschichtenplatte ist mit einem inerten Material abgedeckt. Diese Randabdeckung (126) bildet bei der Betriebstemperatur der Brennstoffzelle eine Barriere, die den Transport von molekularem Sauerstoff aus dem äusseren Milieu (60) in die Trägerstruktur hemmt oder unterbindet. Das Material ist insbesondere YSZ, d.h. mit Yttriumoxid Y₂O₃ stabilisiertes Zirkoniumoxid ZrO₂.

## Beschreibung

### Brennstoffzelle mit einer Festelektrolytschicht

Die Erfindung betrifft eine Brennstoffzelle mit einer Festelektrolytschicht gemäss Oberbegriff von Anspruch 1 sowie eine Batterie mit solchen Brennstoffzellen.

Aus der EP-A- 0 635 896 und der EP-A- 0 788 175 sind Hochtemperatur-Brennstoffzellen bekannt, deren Festelektrolyt jeweils als Teil einer Mehrschichtenplatte in Form einer dünnen Schicht ausgebildet ist. Solche Dünnfilm-Elektrolyte, die 10 - 20 µm dick sind, lassen sich mittels eines VPS-Verfahrens (Vakuum-Plasma-Spritzverfahren) auf eine Trägerstruktur aufbringen. Die Trägerstruktur hat ausser ihrer mechanischen Funktion als Träger auch eine elektrochemische Funktion als Elektrode sowie eine elektrische Funktion als guter Leiter. Bei der sogenannten ASE-Zelle (Anode Supported Electrolyte cell) befindet sich die Trägerstruktur auf der Seite des reduzierenden Brennstoffgases (H₂, CO), d.h. auf der Anodenseite. Die Trägerstruktur kann aus Metallfilz, porösem Metallschaum oder Metallgewebe hergestellt werden. Ein Vorschlag, solche Metallstrukturen gleichzeitig zur Brennstoffverteilung vorzusehen, musste man verwerfen, da der Druckabfall im Gasstrom zu gross und die Verteilqualität ungenügend waren. Ein weiterer Vorschlag, nämlich den Träger mit einem schaumkeramischen Material herzustellen, führte ebenfalls zu Brennstoffzellen, die den Erwartungen nicht genügten.

Bei einer Weiterentwicklung der ASE-Zellen müssen folgende Punkte beachtet werden: Die Trägerstruktur muss mechanisch stabil sein, so dass die Mehrschichtenplatte der ASE-Zelle als ein selbstragendes Element verwendet und als separates Bauteil in eine Batterie von Brennstoffzellen eingelegt werden kann. Die Trägerstruktur muss ein kommunizierendes System von offenen Poren enthalten, so dass ein Gasaustausch zwischen der Anode und einem Verteilersystem ohne grosse Konzentrationsgradienten möglich ist. Das Mehrschichtensystem der ASE-Zelle soll eine Dicke haben, die möglichst kleiner als 1 mm ist. Alterungsprozesse, beispielsweise in Form von Rissbildungen, sollen aufgrund einer geeigneten Materialwahl möglichst langsam verlaufen.

Aufgabe der Erfindung ist es, eine ASE-Zelle zu schaffen, die den genannten Erfordernissen genügt. Diese Aufgabe wird durch die im Anspruch 1 definierte Brennstoffzelle gelöst, die eine ASE-Zelle ist.

Die Brennstoffzelle mit einer Festelektrolytschicht bildet zusammen mit zwei Elektrodenschichten ein plattenförmiges Mehrschichtensystem. Die Schichten sind mittels Beschichtungsverfahren in der Reihenfolge Anode, Elektrolyt und Kathode auf einer offenporigen, elektrisch leitenden Trägerstruktur aufgebracht. Diese Mehrschichtenplatte hat einen äusseren Rand, der während eines stromerzeugenden Betriebs der Brennstoffzelle einem äusseren Milieu ausgesetzt ist, das molekularen Sauerstoff enthält. Das Material der Trägerstruktur nimmt im thermodynamischen Gleichgewicht bei der Betriebstemperatur der Brennstoffzelle je nach Milieu einen oxidierten oder einen reduzierten Zustand an. Der äussere Rand der Mehrschichtenplatte ist mit einem inerten Material abgedeckt. Diese Randabdeckung bildet bei der Betriebstemperatur der Brennstoffzelle eine Barriere, die den Transport von molekularem Sauerstoff aus dem äusseren Milieu in die Trägerstruktur hemmt oder unterbindet. Das Material ist insbesondere YSZ, d.h. mit Yttriumoxid Y₂O₃ stabilisiertes Zirkoniumoxid ZrO₂.

Die Randabdeckung kann auf zwei Arten realisiert werden: 1) Das Material der Trägerstruktur, das nicht beständig ist, wird mit dem inerten, d. h. beständigen Material beschichtet, so dass die Trägerstruktur durch die Beschichtung geschützt wird. 2) Die Trägerstruktur wird in einer ringförmigen Randzone durch das inerte Material substituiert. Die erste Methode wird bevorzugt, da die zweite aufwendiger ist.

Die abhängigen Ansprüche 2 bis 8 betreffen vorteilhafte Ausführungsformen der erfindungsgemässen ASE-Zelle. Anspruch 9 bezieht sich auf eine Batterie mit ASE-Zellen.

Nachfolgend wird die Erfindung anhand der Zeichnungen erläutert. Es zeigen:
- Fig. 1: einen Ausschnitt einer Batterie von Brennstoffzellen,
- Fig. 2: einen Querschnitt durch den Rand einer ASE-Zelle,
- Fig. 3: Darstellung eines Siebdruckverfahrens, mit dem eine Beschichtung auf einer Trägerstruktur aufgebracht wird, und
- Fig. 4: den Rand einer besonderen Trägerstruktur.

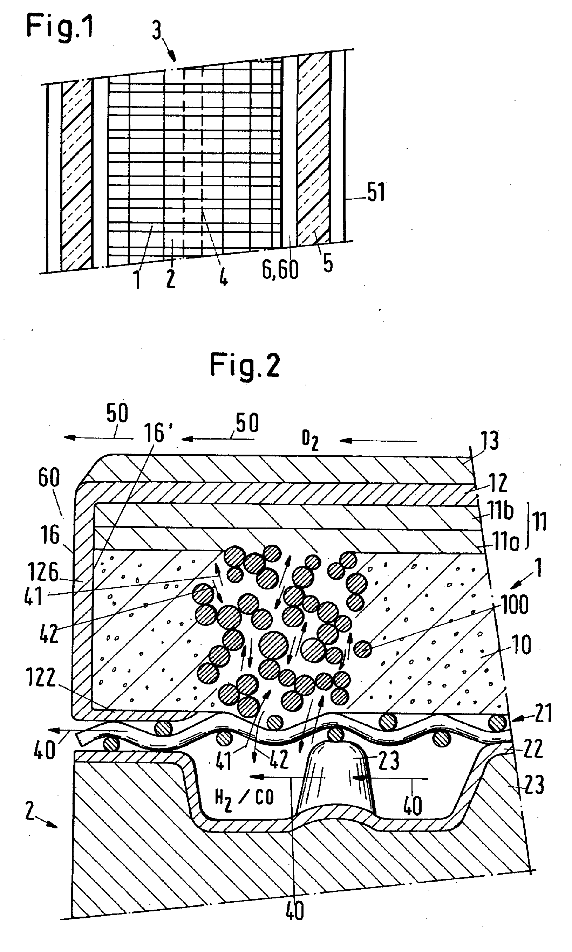

Die in Fig. 1 schematisch dargestellte Batterie besteht aus einem Stapel 3 von alternierend angeordneten Mehrschichtenplatten 1 und Interkonnektoren 2, der als Seitenansicht gezeigt ist. Die Platten 1 sind die elektrochemisch aktiven Bauelemente; die Interkonnektoren 2 stellen einen elektrischen Kontakt zwischen benachbarten Zellen her. Die Interkonnektoren 2 sind auch als Wärmetauscher zum Vorheizen des Sauerstoff führenden Gasstroms ausgebildet; ihre beiden Seitenflächen tragen eine Profilierung, die eine weitgehend gleichmässige Verteilung des oxidierenden bzw. reduzierenden Gases über die Mehrschichtenplatte 1 bewirkt. Das reduzierende Gas wird über einen zentralen Kanal 4 in den Stapel 3 eingespeist.

Der Zellenstapel 3 hat insbesondere einen axialsymmetrischen Aufbau, der beispielsweise kreiszylindrisch oder auch prismatisch ist. Der Stapel 3 ist von einer wärmedämmenden Hülle 5 und einem Ringraum 6 umgeben. Zwischen einer Aussenwand 51 und der Hülle 5 wird das oxidierende Gas, d.h. das Sauerstoff enthaltende Gas (in der Regel Umgebungsluft), verteilt und durch Poren oder Kanäle der Hülle in den Ringraum 6 geleitet. In diesem sind insbesondere Nachverbrennungsräume in Form von vertikalen Kanälen angeordnet (nicht dargestellt). Zwischen diesen Kanälen befinden sich an der Oberfläche des Zellenstapels 3 Eintrittsöffnungen für das oxidierende Gas. Dieses Gas wird bei einem anderen Beispiel für eine Brennstoffzellenbatterie durch eine Vielzahl von Röhrchen eingespeist, die den als einzigen Nachverbrennungsraum ausgebildeten Ringraum 6 radial durchqueren.

Die in Fig. 2 dargestellte Brennstoffzelle ist oder umfasst eine Mehrschichtenplatte 1. Diese besteht aus einer offenporigen, elektrisch gut leitenden Trägerstruktur 10, einer Festelektrolytschicht 12 sowie zwei Elektrodenschichten 11 und 13. Die Schichten sind mittels Beschichtungsverfahren in der Reihenfolge Anode 11, Elektrolyt 12 und Kathode 13 auf der Trägerstruktur 10 aufgebracht. Die Trägerstruktur 10 ist in einem Teilbereich als Aggregat von zusammengesinterten Partikeln 100 dargestellt (nicht massstäbliche Darstellung). Die Anode 11 besteht aus zwei Teilschichten 11a und 11b, wobei die erste Teilschicht 11 a einen Übergang von der porösen Trägerstruktur 10 zur Teilschicht 11 b herstellt, die ein dichtes Substrat der Festelektrolytschicht 12 bildet. Die Mehrschichtenplatte 1 hat einen äusseren Rand 16, der - während eines stromerzeugenden Betriebs der Brennstoffzelle - einem Sauerstoff enthaltenden Milieu 60 ausgesetzt ist. Der Ringraum 6 bildet während des stromerzeugenden Betriebs das Sauerstoff enthaltende Milieu 60 der Zellen.

Das Material der Trägerstruktur 10 nimmt im thermodynamischen Gleichgewicht bei der Betriebstemperatur der Brennstoffzelle je nach Milieu einen oxidierten oder einen reduzierten Zustand an. Die Trägerstruktur 10 ist aus gleichem oder ähnlichem Material wie die Anode 11 hergestellt. Dieses Material ist ein Cermet, d.h. ein Gemisch von Metall bzw. Metalloxid und keramischem Material. Das Metall ist insbesondere Ni bzw. das Metalloxid ist NiO. Beispiele für das keramische Material sind: YSZ, nämlich mit Yttriumoxid Y₂O₃ stabilisiertes Zirkoniumoxid ZrO₂ (3 mol% oder auch 8 mol% Yttriumoxid), Al₂O₃, TiO₂, MgAl₂O₄, LaCrO₃ oder dotiertes CeO₂, das mit Gd-, Sm-, Ca- oder Y-Oxid dotiert ist.

Für eine lange Lebensdauer der Brennstoffzelle ist es nötig, dass durch Dichteverringerungen, die mit dem Übergang von dem oxidierten in den reduzierten Zustand verbunden sind, sich in der Trägerstruktur 10 keine makroskopischen Risse ausbilden. Dies soll zumindest gelten, wenn der Übergang über die gesamte Trägerstuktur 10 homogen erfolgt.

Erfindungsgemäss ist ein äusserer Rand 16' der Trägerstruktur 10 mit einem inerten Material abgedeckt. Das Material einer solchen Randabdeckung 122, 126 bildet bei der Betriebstemperatur der Brennstoffzelle eine Barriere, die den Transport von molekularem Sauerstoff aus dem äusseren Milieu 60 in die Trägerstruktur hemmt oder unterbindet. Im Beispiel der Fig. 2 sind die Elektrolytschicht 12 und die Randabdeckung 122, 126 unter Verwendung eines einzigen Materials - mit Vorteil YSZ - hergestellt, wobei diese eine zusammenhängende Beschichtung bilden. Die Randabdeckung besteht aus einer Abdeckung 126 des äusseren Rands 16' der Trägerstruktur 10 und einer Abdeckung 122 auf der Seitenfläche 122' der Trägerstruktur 10, welche sich auf eine Randzone beschränkt ist, in der im stromerzeugenden Betrieb keine elektrochemischen Prozesse stattfinden.

Da die Elektrolytschicht 12 und die Randabdeckung 122, 126 verschiedene Funktionen haben, ist es vorteilhafter, wenn die Beschichtungen getrennt in zwei Schritten aufgebracht werden. Für die Randabdeckung 122, 126 kann dann auch ein anderes Material als für die Elektrolytschicht 12 genommen werden, nämlich ausser YSZ beispielsweise TiO₂, Al₂O₃, MgAl₂O₄, LaCrO₃ oder Mischungen dieser Stoffe.

Falls die erfindungsgemässe Randabdeckung 122, 126 fehlt, diffundiert aus dem Ringraum 6 Sauerstoff in die poröse Trägerstuktur 10 ein. Es bildet sich eine oxidierte Randzone aus. Zwischen dieser Randzone und dem reduzierten Innenbereich ergeben sich mechanische Spannungen, da in der Randzone die Dichte des Materials zugenommen hat. Der Sauerstoff erzeugt nicht nur die oxidierte Randzone, sondern reagiert auch mit dem reduzierenden Gas, das von Innen her ebenfalls in die Randzone eindiffundiert. Die freigesetzte Reaktionswärme erzeugt lokal Temperaturerhöhungen. Die mechanischen Spannungen und die lokalen Temperaturerhöhungen haben eine schädigende Wirkung: Es bilden sich Risse aus, die tangential gerichtet sind. Aufgrund der Risse löst sich Material vom Rand der Mehrschichtenplatte 1 ab. Dieser Zerfallsprozess breitet sich radial weiter aus, bis die Brennstoffzelle schliesslich nicht mehr funktioniert. Die Randabdeckung 126 unterdrückt den Sauerstofftransport in die Trägerstuktur 10 zumindest teilweise. Ist die Randabdeckung 122, 126 ausreichend dicht, so bleibt der beschriebene Zerfall aus.

In Fig. 2 ist auch ein Teil des Interkonnektors 2 an dessen Anodenseite gezeigt. Die Anodenseite wie auch die Kathodenseite tragen eine Profilierung mit Zäpfchen 23, die eine elektrische Verbindung zu der Mehrschichtenplatte 1 herstellen. Zur Verbesserung des elektrischen Kontakts zwischen der Trägerstruktur 10 und dem Interkonnektor 2 ist zwischen diesen ein Drahtgewebe 21 eingelegt. Der metallische Interkonnektor 2 ist beschichtet: auf der Anodenseite mit einer Kontaktschicht 22 aus Ni, auf der nicht dargestellten Kathodenseite mit einer Schutzschicht, die einen Durchtritt von Chromoxid verhindert, und ebenfalls mit einer Kontaktschicht (vgl. EP-A- 0 974 564).

Der Strom des H₂ und CO enthaltenden Brennstoffgases ist mit den Pfeilen 40 angegeben. Die Pfeile 41 und 42 symbolisieren die Diffusion dieser reaktiven Stoffe zur Anode 11 bzw. die Diffusion der Reaktionsprodukte H₂O und CO₂ in umgekehrter Richtung. Der Strom des O₂ enthaltenden Gasstroms, der sich über die Kathode 13 bewegt, ist mit den Pfeilen 50 angegeben.

Mit Vorteil hat die Trägerstruktur 10 im oxidierten Zustand eine Porosität, deren Wert im Bereich zwischen 20 und 35% liegt. Die Porendurchmesser haben Werte, die weitgehend über einen Bereich von 1 bis 10 µm verteilt sind. Die Porosität kann durch Zugabe von Kohle oder einem anderen ausbrennbaren Material beeinflusst und eingestellt werden. Die Dicke der Trägerstruktur 10 ist je nach Herstellverfahren grösser als 0.3 mm und kleiner als 1.2 mm. Als Herstellverfahren kommen "Tape Casting" (Bandgiessen) und "Slip Casting" (Giessen in eine Form) in Frage. Das erste Verfahren ergibt Dicken von 0.3 bis 0.5 mm, das zweite solche von 0.8 bis 1.5 mm. Beispielsweise bei einem Gemisch von 56 Gew-% NiO und 44 Gew-% YSZ erhält man eine Trägerstruktur 10 mit einer Porosität von 27%. Durch die Reduktion des NiO zu Ni vergrössert sich diese Porosität auf 41.5% (mit 50 Gew-% Ni und 50 Gew-% YSZ).

Die Randabdeckung 122, 126 kann mittels Aufspritzen eines schlickerförmigen Materials, Eintauchen in ein solches Material; Übertragen von Schlicker mit Zwischenträgern (Tampon, Rolle) oder Siebdrucken aufgebracht werden. Bei einem Verfahren mittels Luftdruckspritzens ("airbrush") wird der Schlicker auf eine maskierte Rückseite des Substrats, d.h. des Trägermaterials 10, und dessen äusseren Rand aufgespritzt. Dabei ist die Vorderseite bereits mit der Anode 11 und dem Elektrolyt 12 beschichtet. Beim Eintauchverfahren ("dip coat") wird das Substrat 10 bis zu einer gewünschten Randbreite in ein Schlickerbad getaucht und gleichzeitig durch Drehen so bewegt, dass es über seinen ganzen Umfang beschichtet wird. Bei einem Verfahren mit Verwendung einer Rolle kann der Schlicker durch die Rolle kontinuierlich aus einem Bad aufgenommen und von diesem auf das Substrat 10 übertragen werden.

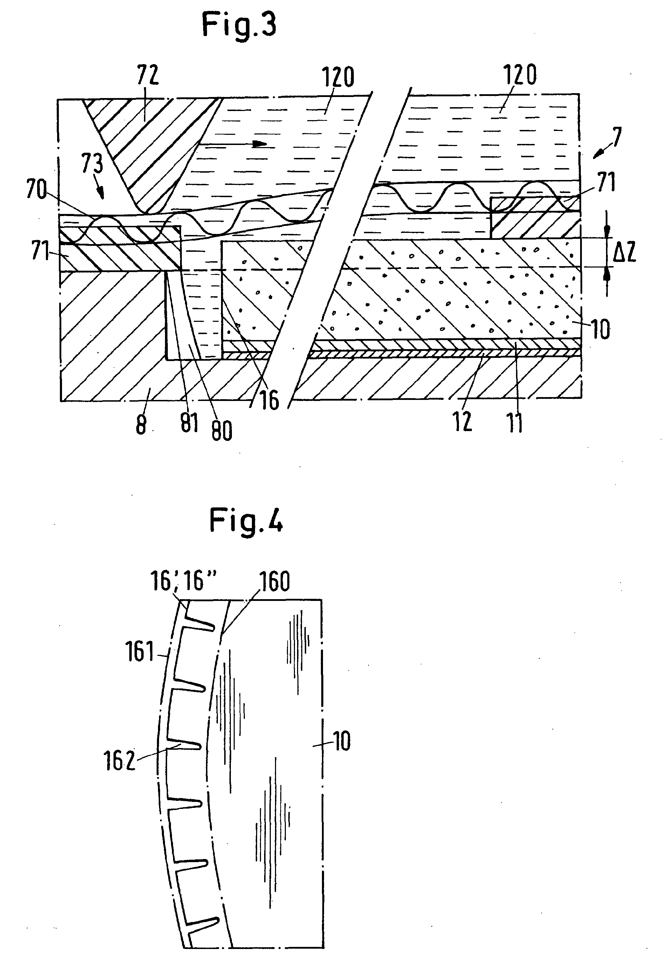

In Fig. 3 ist illustriert, wie mittels eines Siebdruckverfahrens das Schutzmaterial für die Randabdeckung 122, 126 auf eine Trägerstruktur 10 aufgetragen werden kann. Bei diesem Verfahren werden die beiden Teile 122 und 126 der Randabdeckung mit einer Vorrichtung 7 simultan - eine zusammenhängende Beschichtung bildend - aufgebracht. Mit der Vorrichtung 7, die eine Schablone mit Gaze 70 (oder Sieb) und Abdeckfolien 71 sowie eine Rakel 72 umfasst, lässt sich ein Film aus einem Schlicker oder einer Paste 120 auf die Trägerstruktur 10 auftragen. Die Trägerstruktur 10, das Substrat des Beschichtungsverfahrens, ist dabei in einer Vertiefung 80 eines Substrathalters 8 eingelegt. Ein durch die Abdeckfolien 71 für einen Pastendurchtritt freigelassenes Fenster 73 ist so gross gewählt, dass am Rand des Fensters 73 über den Rand 16' der Trägerstruktur 10 Paste 120 abfliessen kann. Damit dies tatsächlich geschieht, muss das Substrat 10 den Rand 81 der Vertiefung 80 genügend weit überragen: der Höhenunterschied Δz muss grösser als etwa 0.2 mm sein. Ist Δz kleiner als etwa 0.05 mm, so entsteht eine Beschichtung nur an den Stellen, wo die Gaze 70 durch die Rakelbewegung mit dem Substrat 10 in direkten Kontakt gebracht wird. Aus der am Rand 16' und der Randzone 122' haftenden Paste 120 entstehen durch ein Sintern (nach einem Trocknen der Paste) eine Randabdeckung, die - anders als die Randabdeckung 122, 126 der Ausführungsform gemäss der Fig. 2 - eine von der Elektrolytschicht 12 separate Beschichtung bildet.

Der äussere Rand 16' der Trägerstruktur 10 ist in einer einfachen Ausführungsform kreisförmig. Er kann auch die Form einer zwischen zwei konzentrischen Kreisen 160, 161 liegenden Kurve 16" haben, wobei diese Randkurve 16" entlang des Umfangs beispielsweise ein periodisches Muster aufweist: siehe Fig. 4. Die Randkurve 16" kann radial gerichtete Einbuchtungen, Nuten oder Spalten 162 haben, die durch die Paste 120 zumindest teilweise gefüllt werden. Die Randkurve 16" kann auch (nicht dargestellt) Durchbrüche umfassen, die beispielsweise einen Saum von regelmässig angeordneten Löchern bilden.

## Patentansprüche

1. Brennstoffzelle mit einer Festelektrolytschicht (12) und zwei Elektrodenschichten (11, 13), die mittels Beschichtungsverfahren in der Reihenfolge Anode (11), Elektrolyt (12) und Kathode (13) auf einer offenporigen, elektrisch leitenden Trägerstruktur (10) aufgebracht sind und die ein plattenförmiges Mehrschichtensystem (1) bilden, wobei diese Mehrschichtenplatte (1) einen äusseren Rand hat, der während eines stromerzeugenden Betriebs der Brennstoffzelle einem äusseren Milieu (60) ausgesetzt ist, das molekularen Sauerstoff enthält, und das Material der Trägerstruktur im thermodynamischen Gleichgewicht bei der Betriebstemperatur der Brennstoffzelle je nach Milieu einen oxidierten oder einen reduzierten Zustand annimmt,
**dadurch gekennzeichnet, dass** der äussere Rand (16) der Mehrschichtenplatte mit einem inerten Material abgedeckt ist und dass diese Randabdeckung (122, 126) bei der Betriebstemperatur der Brennstoffzelle eine Barriere bildet, die den Transport von molekularem Sauerstoff aus dem äusseren Milieu (60) in die Trägerstruktur hemmt oder unterbindet, wobei insbesondere das inerte Material der Randabdeckung YSZ ist, d.h. mit Yttriumoxid Y₂O₃ stabilisiertes Zirkoniumoxid ZrO₂.

2. Brennstoffzelle nach Anspruch 1, **gekennzeichnet durch** eine Trägerstruktur (10), die einen Übergang von dem oxidierten in den reduzierten Zustand erlaubt, bei dem trotz einer Dichteverringerung sich keine makroskopischen Risse ausbilden, sofern der Übergang über die gesamte Trägerstuktur homogen erfolgt.

3. Brennstoffzelle nach Anspruch 1 oder 2, **gekennzeichnet durch** eine Trägerstruktur (10), die aus gleichem oder ähnlichem Material wie die Anode (11) hergestellt ist, wobei das Material ein Gemisch von Metall bzw. Metalloxid und keramischem Material ist, und insbesondere das Metall Ni bzw. das Metalloxid NiO ist und das keramische Material einer der folgenden Stoffe oder ein Gemisch dieser Stoffe ist: YSZ, Al₂O₃, TiO₂, MgAl₂O₄, LaCrO₃ oder dotiertes CeO₂, das mit Gd-, Sm-, Ca- oder Y-Oxid dotiert ist.

4. Brennstoffzelle nach einem der Ansprüche 1 bis 3, **gekennzeichnet durch** eine Trägerstruktur (10), deren Porosität im oxidierten Zustand einen Wert im Bereich zwischen 20 und 35% hat, deren Porendurchmesser Werte haben, die weitgehend über einen Bereich von 1 bis 10 µm verteilt sind, deren Dicke grösser als 0.3 mm und kleiner als 1.2 mm ist.

5. Brennstoffzelle nach einem der Ansprüche 1 bis 4, **dadurch gekennzeichnet, dass** die Randabdeckung (122, 126) mittels Aufspritzen eines schlickerförmigen Materials, Eintauchen in ein solches Materials, Übertragen des Materials mit Zwischenträgern oder Siebdrucken aufgebracht ist.

6. Brennstoffzelle nach Anspruch 5, **dadurch gekennzeichnet, dass** die Elektrolytschicht (12) und die Randabdeckung (122, 126) unter Verwendung eines einzigen Materials, eine zusammenhängende Beschichtung bildend, aufgebracht sind; oder dass die Elektrolytschicht (12) und die Randabdeckung (122, 126) je in einem separaten Schritt aufgebracht sind, wobei das Material für die Randabdeckung beispielsweise YSZ, TiO₂, Al₂O₃, MgAl₂O₄, LaCrO₃ oder ein Gemisch dieser Stoffe ist.

7. Brennstoffzelle nach einem der Ansprüche 1 bis 5, **dadurch gekennzeichnet, dass** der äussere Rand (16') der Trägerstruktur (10) die Form eines Kreises oder einer zwischen zwei konzentrischen Kreisen (160, 161) liegenden Kurve (16") hat, wobei insbesondere diese Randkurve (16") entlang des Umfangs ein periodisches Muster aufweist, beispielsweise radial gerichtete Einbuchtungen, Nuten oder Spalten (162) aufweist oder einen Saum von Durchbrüchen umfasst, die durch das Material der Randabdeckung zumindest teilweise gefüllt sind.

8. Brennstoffzelle nach einem der Ansprüche 1 bis 7, **dadurch gekennzeichnet, dass** die Trägerstruktur (10) auf einer Seitenfläche (122') mit der Randabdeckung abgedeckt ist, wobei die Seitenfläche sich parallel zu den Schichten der Mehrschichtenplatte (1) erstreckt und die Randabdeckung (122) auf eine Randzone beschränkt ist, in der im stromerzeugenden Betrieb keine elektrochemischen Prozesse stattfinden.

9. Batterie mit Brennstoffzellen gemäss einem der Ansprüche 1 bis 8,
**dadurch gekennzeichnet, dass** die Mehrschichtenplatten (1) und Interkonnektoren (2) in einer alternierenden Anordnung zu einem Zellenstapel (3) zusammengesetzt sind, dass ein Ringraum (6) mit einem oder mehreren Nachverbrennungsräumen an der seitlichen Oberfläche des Zellenstapels vorgesehen ist und dass der Ringraum während eines stromerzeugenden Betriebs das Sauerstoff enthaltende Milieu (60) der Zellen bildet.
